# EUROPEAN PATENT APPLICATION

(11) **EP 3 091 128 A1**
(43) Date of publication of application: **09.11.2016**
(21) Application number: 15166177.4
(22) Date of filing: 04.05.2015
(51) Int. Cl.: E02F 3/30, E02F 9/08, E02F 9/18, F01N 3/08, F01N 3/20, F01N 3/035, E02F 3/46, F02B 63/00

(54) **HYDRAULIC MINING SHOVEL WITH SCR UNIT**

(71) Applicant: Caterpillar Global Mining LLC, Oak Creek, WI 53154 (US)
(72) Inventor: Capraro, Sebastian, 44135 Dortmund (DE); Bitter, Marcus, 44267 Dortmund (DE); Karrenberg, Lutz, 45136 Essen (DE); Walter, Daniel, Waukesha, WI 53189 (US); Marjanovic, Zoran, 44149 Dortmund (DE); Schneider, Michael, 97877 Wertheim (DE)
(74) Representative: Kramer Barske Schmidtchen Patentanwälte PartG mbB

(57) **Abstract**

The present disclosure relates to a hydraulic mining shovel (100). The shovel (100) may comprise a main frame (112), a power module (114) and a counterweight module (116). The shovel (100) may further comprise a first exhaust aftertreatment module (120) and a second exhaust aftertreatment module (121), each being mounted onto the counterweight module (116) and each including a reductant tank and pump unit (160, 162) and a selective catalytic reduction unit (156, 158). The first exhaust aftertreatment module (120) and the second exhaust aftertreatment module (121) may be configured and arranged substantially mirror-symmetrically at opposing sides of the counterweight module (116) with respect to a central longitudinal axis (A) of the main frame (112).

## Description

### Technical Field

The present disclosure relates to a hydraulic mining shovel, and more particularly to a hydraulic mining shovel configuration including an exhaust aftertreatment module with a selective catalytic reduction unit.

### Background

In surface mining, hydraulic mining shovels (also referred to as large hydraulic excavators) may be used for digging and extracting material and minerals. For providing power to various components of the hydraulic mining shovel, the same may include one or more engines. For example, those engines may be electric motors or internal combustion engines such as diesel engines.

Due to an increasing environmental consciousness and emission regulations, recent developments of engine manufacturers aim to reduce the emissions of internal combustion engines, for example emission of nitrogen oxides that may be generated during combustion in the internal combustion engine. A technique for reducing those nitrogen oxides is the so-called selective catalytic reduction (SCR). Typically, SCR aftertreatment units receive a stream of exhaust gas from an outlet of the internal combustion engine and treat the exhaust gas with a reductant such as urea to reduce nitrogen oxides therein to diatomic nitrogen and water.

The present disclosure is directed, at least in part, to improving or overcoming one or more aspects of prior systems.

### Summary of the Disclosure

In one aspect of the present disclosure, a hydraulic mining shovel is disclosed. The hydraulic mining shovel may comprise a main frame extending along a central longitudinal axis, and a power module mounted onto the main frame and including a first internal combustion engine and a second internal combustion engine. The hydraulic mining shovel may further comprise a counterweight module mounted onto the main frame and including a counterweight for maintaining stability of the hydraulic mining shovel. Still further, the hydraulic mining shovel may comprise a first exhaust aftertreatment module and a second exhaust aftertreatment module. Each of the first exhaust aftertreatment module and the second exhaust aftertreatment module may be mounted onto the counterweight module and may include a reductant tank and pump unit and a selective catalytic reduction unit. The reductant tank and pump unit may be configured to store and supply a reductant, and the selective catalytic reduction unit may be fluidly connected to the respective reductant tank and pump unit for receiving the reductant. The first exhaust aftertreatment module may be fluidly connected to the first internal combustion engine. The second exhaust aftertreatment module may be fluidly connected to the second internal combustion engine. The first exhaust aftertreatment module and the second exhaust aftertreatment module may be configured and arranged substantially mirror-symmetrically at opposing sides of the counterweight module with respect to the central longitudinal axis.

In another aspect of the present disclosure, a carrier structure is disclosed. The carrier structure may be configured to support a reductant pump and tank unit, and a selective catalytic reduction unit. Further, the carrier structure may be configured to be releasably mounted on a hydraulic mining shovel, particularly onto a counterweight module of the hydraulic mining shovel.

Other features and aspects of this disclosure will be apparent from the following description and the accompanying drawings.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
Fig. 1 shows a side view drawing of an exemplary hydraulic mining shovel;
Fig. 2 shows a schematic top view onto an exemplary superstructure;
Fig. 3 shows a schematic top view onto another exemplary superstructure;
Fig. 4 shows a drawing of an exemplary exhaust aftertreatment module; and
Fig. 5 shows a drawing of the exemplary exhaust aftertreatment module including a cover.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure is based in part on the realization that a hydraulic mining shovel poses specific and challenging requirements for an optimized integration of an SCR aftertreatment unit. Particularly, it was found that an SCR aftertreatment unit and its components sum up to a considerable size, because the large internal combustion engines of a hydraulic mining shovel generate large amounts of exhaust gas to be treated by the SCR aftertreatment unit. Accordingly, herein, a modular construction of the SCR aftertreatment units is suggested, which includes all required components, partly integrated into subunits for integrating different functionalities. Additionally, an arrangement of the SCR aftertreatment units is suggested, which considers the specific requirements of a hydraulic mining shovel in terms of collision avoidance, operator and machine safety, space-saving arrangement, and homogeneous mass distribution as is described in greater detail later on.

The present disclosure is further based in part on the realization that a modular configuration of the aftertreatment unit in coordination with further modules and components of the hydraulic mining shovel allows to provide a plurality of construction kits for hydraulic mining shovels having a plurality of standardized parts while providing different exhaust aftertreatment capabilities. Specifically, based on national and regional emission regulations and customer requirements, a hydraulic mining shovel may require an SCR unit or not. By configuring the exhaust aftertreatment unit as a module, the same may be included or not as desired without affecting the presence, configuration and arrangement of the remaining parts and components of the hydraulic mining shovel such as the internal combustion engine(s). Furthermore, a modular configuration of the hydraulic mining shovel with respect to the exhaust aftertreatment module may facilitate retrofitting the exhaust aftertreatment module without requiring modifications and rearrangement of other components of the hydraulic mining shovel. Particularly, connecting parts and points for mounting the aftertreatment module and connecting the same to the internal combustion engine may be already present in a required configuration for receiving the aftertreatment module.

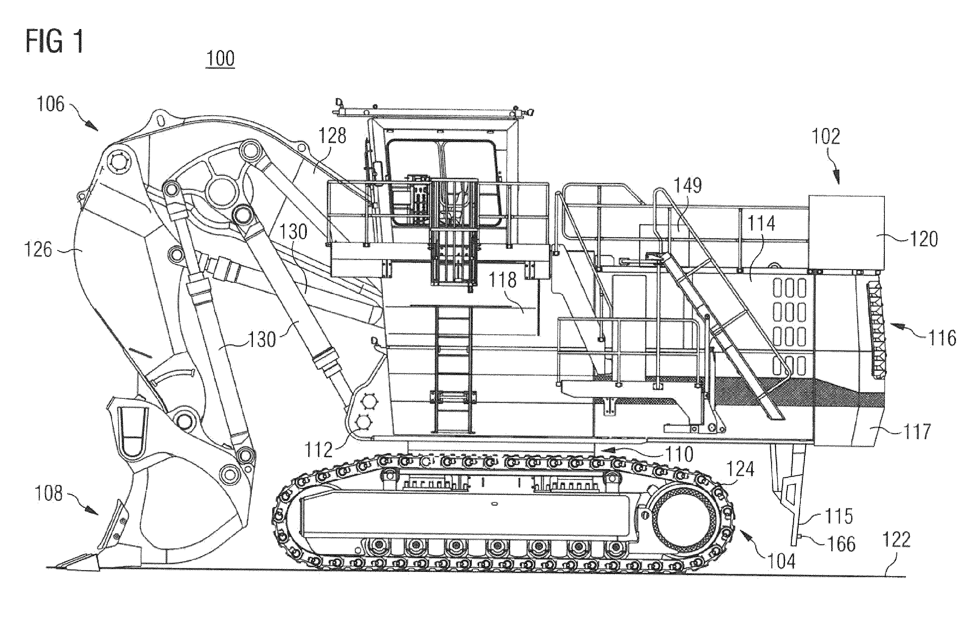

Referring now to the drawings for describing an exemplary hydraulic mining shovel 100 as shown in Fig.1.

In the shown embodiment of Fig. 1, hydraulic mining shovel 100 comprises a superstructure (upper carriage) 102, an undercarriage 104, and an attachment 106 with an implement 108. A slewing gear device (swing gear device) 110 is mounted to superstructure 102 and undercarriage 104 to enable a relative rotary movement to occur between superstructure 102 and undercarriage 104.

Superstructure 102 includes a plurality of modules mounted to one another and/or to a main frame 112 extending longitudinally in a bottom region of superstructure 102 (in Fig. 1 a front end of main frame 112 is visible only).

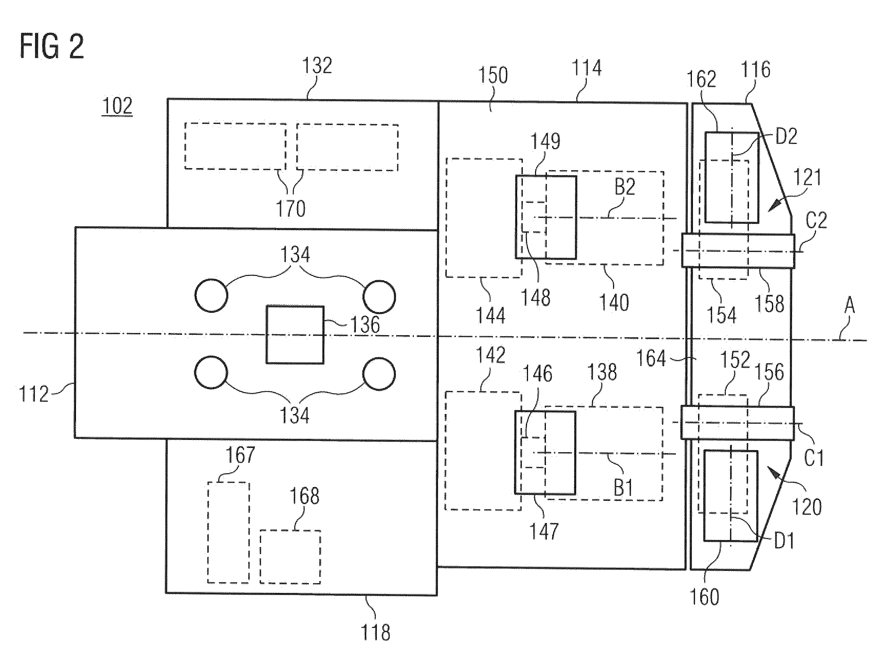

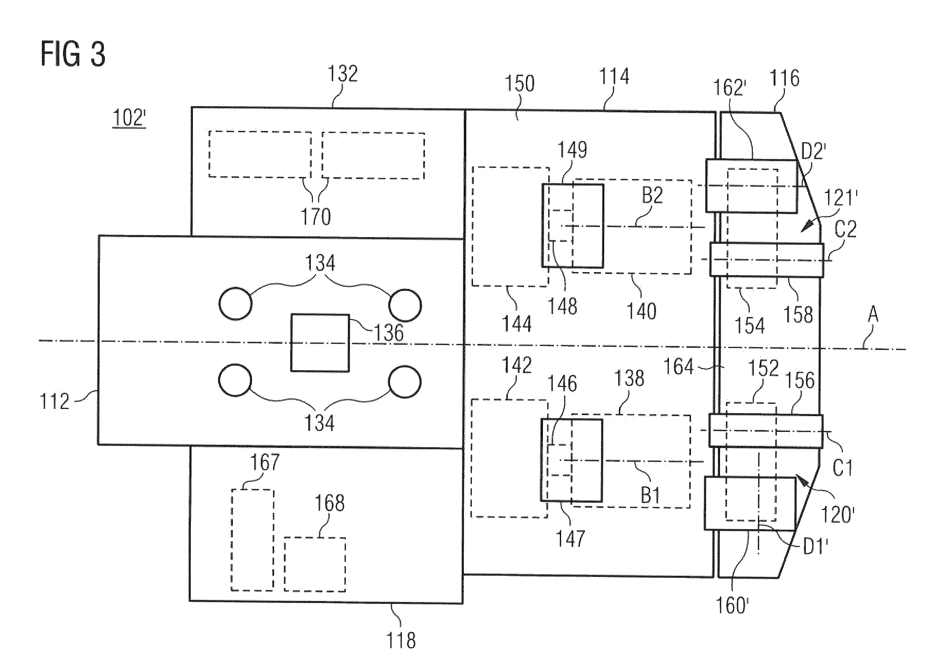

The modules include a power module 114, a counterweight module 116 with a counterweight 117, an operator cab module 118, a first exhaust aftertreatment module 120, and a second exhaust aftertreatment module and an oil cooler module (see Figs. 2 and 3 as both are not visible in the side view of Fig. 1). Said modules are described in more detail herein under reference to Figs. 2 to 5.

In a bottom region of power module 114, a movable service unit 115 is provided. Said service unit 115 may selectively move in direction to ground surface 122 for providing access to refill inlets and/or control panels for an operator on ground level. During operation, service unit 115 may be retracted into an accommodation chamber in power module 114, for example by means of a hydraulic actuator. In some embodiments, the retraction-and-extension-mechanism for service unit 115 may be configured to pivot service unit 115 out of its accommodation chamber.

Further, undercarriage 104 includes a propulsion device for propelling hydraulic mining shovel 100 on a work surface 122. For example, the propulsion device may include track chains 124 and drive motors for driving track chains 124.

Attachment 106 includes work implement 108 such as a face shovel, which is movably mounted to a front end of a stick 126 that is in turn movably mounted to a boom 128. A plurality of hydraulic actuators 130 allow moving work implement 108, stick 126 and boom 128 as desired during mining operation.

Turning to Fig. 2 for describing an exemplary layout concept of superstructure modules and their components. It is noted that in Figs. 2 and 3, modules and components are indicated in a schematic manner only. Furthermore, components accommodated inside a respective module are indicated by dashed lines, whereas solid lines indicate a visibility of the component in a top view onto superstructure 102 assuming that possibly existing covers are demounted.

As noted above and as can be seen in Fig. 2, superstructure 102 includes main frame 112, power module 114, counterweight module 116, operator cab module 118, first and second aftertreatment modules 120, 121, and oil cooler module 132.

Further, main frame 112 extends along a central longitudinal axis A and supports modules 114, 116, 118 and 132. In this context it should be noted that main frame 112 is shown in part only as it is partly overlapped, in particular, by power module 114 and counterweight module 116. Besides mounting structures for attachment 106 (see Fig. 1) not shown in detail, main frame 112 further supports swing drives 134 and a rotary distributor 136 for rotating slewing gear device 110 (see Fig. 1).

Inside power module 114, first and second internal combustion engines 138 and 140 are accommodated such that their longitudinal axes (crankshaft axes) B1, B2 extend parallel to central longitudinal axis A of main frame 112. Additionally, for providing hydraulic power to various components of hydraulic mining shovel 100, first and second pump transfer gearboxes 142 and 144 are operationally connected to respective outputs of first and second internal combustion engines 138 and 140 via respective couplings 146, 148. For example, engines 138 and 140 are configured as diesel engines. Further, as depicted in Fig. 2, a space-saving arrangement may include that first and second internal combustion engines 138, 140 are configured and arranged mirror-symmetrically on opposing sides of power module 114 with respect to central longitudinal axis A. In other embodiments, for example, first and second internal combustion engines 138, 140 may be configured and arranged merely substantially mirror-symmetrically on opposing sides of power module 114 with respect to central longitudinal axis A.

Intake air is provided to internal combustion engines 138, 140 by first and second air intake units 147 and 149 which are mounted on a top deck 150 of power module 114. Said air intake units 147, 149 are fluidly connected to engines 138, 140 via suitable piping not shown in detail. Additionally, air intake units 147 and 149 may be equipped with air filters for cleaning ambient air before supplying the same to engines 138, 140.

For maintaining stability of hydraulic mining shovel 100 during operation, counterweight module 116 includes counterweight 117 (see Fig. 1). Counterweight module 116 is mounted onto main frame 112 with a clearance to power module 114 for allowing relative movement between modules 116 and 114 such that counterweight module 116 is decoupled (isolated) against vibrations of power module 114, in particular, of first and second internal combustion engines 138, 140. Additionally, first and second engine coolers 152 and 154 including fans for drawing ambient air from the environment are accommodated in counterweight module 116 for cooling engines 138 and 140, respectively.

On a top deck 164 of counterweight module 116, first and second exhaust aftertreatment modules 120 and 121 are mounted. Each exhaust aftertreatment module 120, 121 includes a respective reductant tank and pump unit 160, 162 and a respective selective catalytic reduction (SCR) unit 156, 158. Further, first and second exhaust aftertreatment modules 120, 121 are configured and arranged mirror-symmetrically at opposing sides of top deck 164 of counterweight module 116 with respect to central longitudinal axis A. Additionally, SCR units 156, 158 are mounted closer to central longitudinal axis A than reductant tank and pump units 160, 162. Alternatively, reductant tank and pump units 160, 162 may be mounted closer to central longitudinal axis A than SCR units 156, 158. Further, in the shown configuration of Fig. 2, SCR units 156 and 158 are oriented such that their longitudinal axes C1 and C2, respectively, extend parallel to central longitudinal axis A of main frame 112, whereas reductant tank and pump units 160 and 162 are oriented such that their longitudinal axes D1 and D2 extend perpendicular to central longitudinal axis A.

In some embodiments, first and second exhaust aftertreatment modules 120, 121 may be configured and arranged merely substantially mirror-symmetrically at opposing sides of top deck 164 of counterweight module 116 with respect to central longitudinal axis A. For example, a substantially mirror-symmetrically arrangement may include installation tolerances, and/or merely relatively small deviations from a corresponding mirror-symmetrical arrangement, for instance, a single digit percentage deviation relative to a corresponding absolute mirror-symmetrical arrangement.

Above described arrangement and configuration of exhaust aftertreatment modules 120 and 121 provides a couple of advantages. For example, first and second exhaust aftertreatment modules 120 and 121 are substantially isolated against vibrations of internal combustion engines 138 and 140 due to the installation onto counterweight module 116. Further, first and second exhaust aftertreatment modules 120 and 121 are arranged to prevent occurrence of any collisions with material to be excavated and other vehicles. The reason is that modules 120 and 121 do not or at least not substantially project beyond counterweight module 116 in directions of central longitudinal axis A and perpendicular to central longitudinal axis A. Still further, as can be seen in conjunction with Fig. 1, modules 120, 121 and railways (see Fig. 1) on top decks 150 and 164 may function as barriers for increasing safety of operators walking on top decks 150 and 164 to prevent that operators may fall down to working surface 122. Additionally, the mirror-symmetrical arrangement provides a homogeneous mass distribution acting onto counterweight module 116, which further increases the stability of hydraulic mining shovel 100 and may also allow to reduce a mass of counterweight 117 (see Fig. 1) as such a mass reduction may be compensated by exhaust aftertreatment modules 120, 121.

First reductant tank and pump units 160, 162 may be integrated units including a storage chamber for storing a reductant, and at least one pump for pumping the reductant from the storage chamber to the respective SCR units 156 or 158. By configuring first reductant tank and pump units 160, 162 as integrated units, a space-saving configuration of those components is provided, which eases and quickens installation as the integrated units can be fully assembled before installation on hydraulic mining shovel 100.

Each storage chamber may have a capacity of several hundred liters, for example more than 500 liters, because the to-be-treated exhaust gas amount generated by engines 138 and 140 may be relatively large. The storage capacity may be configured to provide enough reductant for at least one work shift, preferably at least one work day. For refilling reductant, an operator may connect a supply pipe to a reductant refill inlet(s) 166 (see Fig. 1), which is/are fluidly connected to storage chambers of tank and pump units 160 and 162. Said reductant refill inlet(s) 166 may be provided at movable service unit 115. If a reductant refill is required, the operator may lower service unit 115 in direction to working surface 122 such that refilling reductant can be performed in a convenient manner from ground level. Additionally or alternatively, tank and pump units 160 and 162 may be provided with reductant refill inlets.

Reductant is supplied from first and second tank and pump units 160 and 162 to SCR units 156 and 158, respectively, via fluid connections (not shown). Said SCR units 156 and 158 include exhaust passages being fluidly connected to exhaust outlets of internal combustion engines 138 and 140, for example, with flexible piping, because of potential relative movements between power module 114 and counterweight module 116. In operation, SCR units 156 and 158 inject reductant from tank and pump units 160 and 162 into respective exhaust gas streams provided by engines 138 and 140, and passing the exhaust passages of SCR units 156 and 158. The injected reductant together with a suitable catalyzer structure housed in SCR units 156 and 158 ensures that a considerable amount of nitrogen oxides present in the exhaust gas streams is reduced to diatomic nitrogen and water. Then, the cleaned exhaust gas leaves SCR units 156 and 158 to the environment.

Furthermore, operator cab module 118 may provide an operator seat 168 and a control panel 167 for an operator to control hydraulic mining shovel 100 as desired. For example, control panel 167 may include joysticks, levers, buttons, and the like for propelling hydraulic mining shovel, and controlling operation of implement 108, attachment 106, and slewing gear device 110. In some embodiments, operator cab module 118 may further include interfaces, for example a display, for conveying information such as machine parameters and environmental conditions to an operator. Additionally or alternatively, a remote control and/or interface unit for the operator may be provided outside of operator cab module 118, for example remote from hydraulic mining shovel 100.

Oil cooler module 132 is provided on an opposite side of mainframe 112 with respect to operator cab module 118. In oil cooler module 132, at least one oil cooler 170 is accommodated.

Referring now to Fig. 3, which shows an arrangement of modules and components of superstructure 102' very similar to the one shown in Fig. 2 except that first and second tank and pump units 160' and 162' are oriented in a different manner.

Specifically, in the embodiment shown in Fig. 3, first and second tank and pump units 160' and 162' are oriented such that their respective longitudinal axes D1' and D2' are parallel to longitudinal axes A, C1 and C2. Again, said arrangement provides the same advantages as the one shown in Fig. 2, for example in terms of collision avoidance, operator safety, space-saving arrangement and configuration, and homogeneous mass distribution.

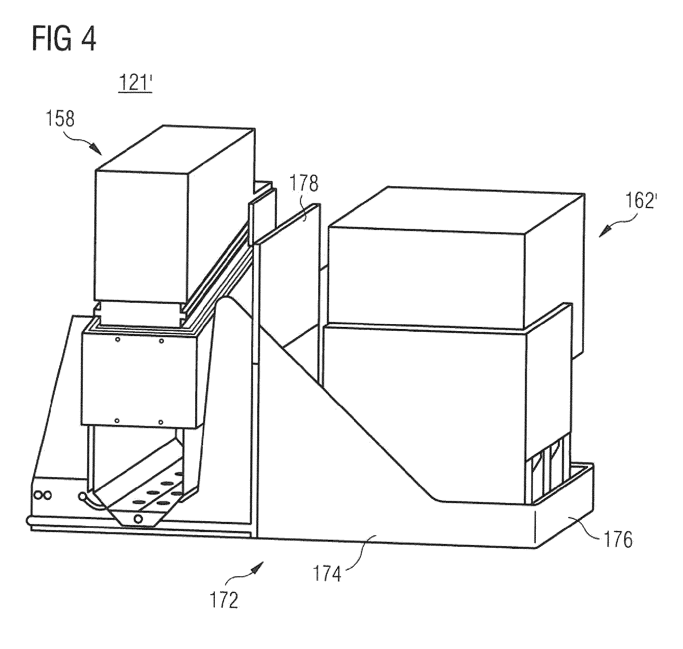

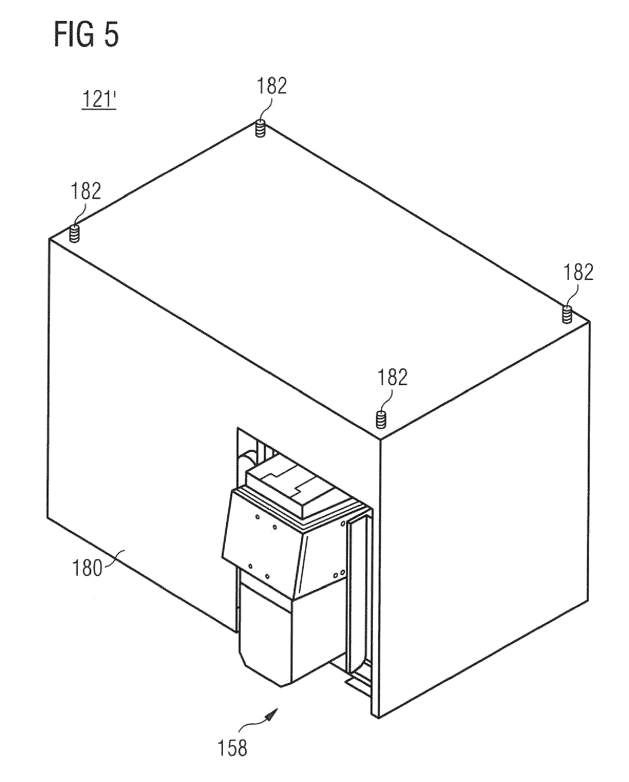

Referring now to Figs. 4 and 5 for describing exhaust aftertreatment modules 120 and 121 in more detail. Specifically, in Figs. 4 and 5, second aftertreatment module 121' is depicted. However, features described in the following may apply to both exhaust aftertreatment modules 120 and 121 if applicable and desired.

As can be seen in Fig. 3, a carrier structure 172 may be provided to support and fasten both reductant pump and tank unit 160' and SCR unit 158. By mounting both units 160' and 158 onto one carrier, namely carrier structure 172, exhaust aftertreatment module 121' can be moved onto counterweight module 116 and installed thereon as a whole in one single step. For example, carrier structure 172 may include at least one mounting unit (not shown in further detail) for lifting the same with a crane or the like.

In some embodiments, a common carrier structure may be provided for both exhaust aftertreatment modules 120 and 121. For example, the common carrier structure may be formed as an integral unit, or as two separate carrier structures 172 fastened to one another. By providing a common carrier structure, first and second exhaust aftertreatment modules may be lifted and/or installed on hydraulic mining shovel 100 as a whole in one single step.

For allowing a quick installation, retrofit and replacement if required, carrier structure 172 may further include fastening units for realeasably securing exhaust aftertreatment module 121' onto counterweight module 116 (see Figs. 1 to 3). For example, the fastening means may include bolts, screws or the like.

Furthermore, a drip pan 174 is disposed below reductant tank and pump unit 162' such that in the event of a leakage, the leaking highly-corrosive reductant can be collected in drip pan 174 instead of flowing into power module 114 and/or counterweight module 116 (see Figs. 1 to 3), which may damage components accommodated therein, for example internal combustion engines 138, 140 and engine coolers 152 and 154. For instance, drip pan 174 may be integrated into carrier structure 172.

As the reductant storage chamber of reductant tank and pump unit 162' may store several hundred liters of reductant, a volume of drip pan 174 may be not sufficient to collect the entire leaking reductant. A drainage mechanism may be included which ensures that in case drip pan 174 is almost entirely filled, the reductant is drained from the drip pan in a desired manner to ensure that the leaking reductant does not come into contact with any endangered component. For example, a drainage mechanism may include relatively low-height side walls 176 of drip pan 174 in a region which would allow reductant to overflow in a direction away from power module 114.

Still further, a heat insulation wall 178 may be arranged between reductant tank and pump unit 162' and SCR unit 158 to reduce a heat transfer from SCR unit 158 to reductant tank and pump unit 162'. Said heat insulation wall 178 allows to arrange reductant tank and pump unit 162' and SCR unit 158 close together although the reductant in the storage chamber of reductant tank and pump unit 162' is very sensitive to heat. For example, heat insulation wall 178 may include a heat insulating material.

Moreover, heat insulation wall 178 may be releasably mounted to carrier structure 172 such that the same can be removed in case of very low temperatures, for example during winter, to allow a certain heat transfer which (slightly) warms the reductant, because the same may be also very sensitive to cold.

For protecting exhaust aftertreatment module 121' against direct sunlight, debris and oil vapor etc., module 121' may further include a protection cover 180 covering reductant tank and pump unit 162' and SCR unit 158. Protection cover 180 may include lifting mounts 182 for moving and installing the same. In some embodiments, protection cover 180 may cover reductant tank and pump unit 162' or SCR unit 158 only.

As one skilled in the art will appreciate, application of carrier structure 172 and its features is not limited to mirror-symmetrical arrangement and configurations of exhaust aftertreatment modules 120, 121 as shown in Figs. 2 and 3, but may be used in other arrangements and configurations including, for example, other installation positions of the carrier structure on the hydraulic mining shovel, and more or less exhaust aftertreatment modules and internal combustion engines.

### Industrial Applicability

The hydraulic mining shovel configuration disclosed herein is particularly applicable in hydraulic mining shovels requiring an exhaust aftertreatment device including an SCR unit.

By configuring the exhaust aftertreatment unit as a module in an arrangement and configuration as exemplary disclosed herein, various advantages may be achieved. For example, exhaust aftertreatment modules 120, 121 are substantially isolated against vibrations of internal combustion engines 138, 140 due to their arrangement onto counterweight module 116. Further, the relatively small overall dimensions of exhaust aftertreatment modules 120, 121 in combination with the non-projecting (or at least not substantially projecting) arrangement onto counterweight module 116 helps to avoid any collisions with material walls and vehicles. Additionally, the modular construction allows retrofitting exhaust aftertreatment modules 120, 121, and eases and quickens installation of the same as all components of exhaust aftertreatment modules 120, 121 can be assembled and connected with one another before actually installing modules 120, 121 on hydraulic mining shovel 100.

As used herein, mirror-symmetrical arrangement and configuration is meant to be understood in a generic manner. Specifically, the term refers to a situation in which the parts and units, which are essentially necessary for operation of the respective component or module, are mirrored. Hence, it is intended that features having no key functionality with respect to the desired function of the module do not necessarily have to be mirrored. For example, a substantially mirror-symmetric arrangement and configuration with respect to exhaust aftertreatment modules 120 and 121 specifically means that both modules include substantially equal-constructed reductant tank and pump units 160, 162 and substantially equal-constructed SCR units 156, 158 in a substantially mirrored arrangement with respect to a reference axis.

Although the preferred embodiments of this invention have been described herein, improvements and modifications may be incorporated without departing from the scope of the following claims.

## Claims

1. A hydraulic mining shovel (100), comprising:
a main frame (112) extending along a central longitudinal axis (A);
a power module (114) mounted onto the main frame (112) and including a first internal combustion engine (138) and a second internal combustion engine (140);
a counterweight module (116) mounted onto the main frame (112) and including a counterweight (117) for maintaining stability of the hydraulic mining shovel (100);
a first exhaust aftertreatment module (120) and a second exhaust aftertreatment module (121), each being mounted onto the counterweight module (116) and each including:
a reductant tank and pump unit (160, 162) configured to store and supply a reductant; and
a selective catalytic reduction unit (156, 158) fluidly connected to the respective reductant tank and pump unit (160, 162) for receiving the reductant;
wherein the first exhaust aftertreatment module (120) is fluidly connected to the first internal combustion engine (138), the second exhaust aftertreatment module (121) is fluidly connected to the second internal combustion engine (140), and the first exhaust aftertreatment module (120) and the second exhaust aftertreatment module (121) are configured and arranged substantially mirror-symmetrically at opposing sides of the counterweight module (116) with respect to the central longitudinal axis (A).

2. The hydraulic mining shovel (100) of claim 1, wherein the first internal combustion engine (138) and the second internal combustion engine (140) are configured and arranged substantially mirror-symmetrically on opposing sides of the power module (114) with respect to the central longitudinal axis (A).

3. The hydraulic mining shovel (100) of claim 1 or 2, wherein:
the first and second selective catalytic reduction units (156, 158) have respective longitudinal axes (C1, C2) extending substantially parallel to the central longitudinal axis (A); and/or
the first and second internal combustion engines (138, 140) have respective longitudinal axes (B1, B2) extending substantially parallel to the central longitudinal axis (A).

4. The hydraulic mining shovel (100) of any one of the preceding claims, wherein:
the first and second reductant tank and pump units (160, 162) have respective longitudinal axes (D1, D2) extending substantially perpendicular to the central longitudinal axis (A); or
the first and second reductant tank and pump units (160', 162') have respective longitudinal axes (D1', D2') extending substantially parallel to the central longitudinal axis (A).

5. The hydraulic mining shovel (100) of any one of the preceding claims, wherein the first and second selective catalytic reduction units (156, 158) are mounted closer to the central longitudinal axis (A) than the first and second reductant tank and pump units (160, 162).

6. The hydraulic mining shovel (100) of any one of the preceding claims, wherein the power module (114) further comprises a service unit (115) providing a reductant refill inlet (166) in fluid connection with the first and/or second reductant tank and pump unit (160, 162) for refilling reductant.

7. The hydraulic mining shovel (100) of claim 6, wherein the service unit (115) is arranged in a bottom region of the power module (114), and is configured to extend in direction to a ground surface (122) for providing access to the reductant refill inlet (166) for an operator on ground level and to retract into the power module (114) for mining operation.

8. The hydraulic mining shovel (100) of any one of the preceding claims, wherein at least one of the first and second exhaust aftertreatment modules (120, 121) further comprises a carrier structure (172) supporting the respective reductant pump and tank unit (160, 162) and the respective selective catalytic reduction unit (156, 158), the carrier structure (172) being releasably mounted onto the counterweight module (116).

9. The hydraulic mining shovel (100) of claim 8, wherein the carrier structure (172) of the first exhaust aftertreatment module (120) and the carrier structure (172) of the second exhaust aftertreatment module (121) are formed as a common carrier structure.

10. The hydraulic mining shovel (100) of any one of the preceding claims, wherein at least one of the first and second exhaust aftertreatment modules (120, 121) further comprises a drip pan (174) arranged below the respective reductant tank and pump unit (160, 162) for collecting leaking reductant, and optionally, the drip pan (174) is integrated into a carrier structure (172) of the respective exhaust aftertreatment module (120, 121).

11. The hydraulic mining shovel (100) of claim 9 or 10, wherein the drip pan (174) includes a drainage mechanism (176) configured to drain reductant from the drip pan (174) to a direction away from the power module (114).

12. The hydraulic mining shovel (100) of any one of the preceding claims, wherein at least one of the first and second exhaust aftertreatment modules (120, 121) includes a heat insulation wall (178) arranged between the respective reductant tank and pump unit (160, 162) and the respective selective catalytic reduction unit (156, 158).

13. The hydraulic mining shovel (100) of claim 12, wherein the heat insulation wall (178) is releasably mounted to a carrier structure (172) of the respective exhaust aftertreatment module (120, 121).

14. The hydraulic mining shovel (100) of any one of the preceding claims, wherein at least one of the first and second exhaust aftertreatment modules (120, 121) includes a protection cover (180) covering the respective reductant tank and pump unit (160, 162) and/or the respective selective catalytic reduction unit (156, 158).

15. The hydraulic mining shovel (100) of any one of the preceding claims, wherein the counterweight module (116) and the power module (114) are mounted onto the main frame (112) with a clearance between the counterweight module (116) and the power module (114).
